(19) Europäisches Patentamt
European Patent Office
Office européen des brevets

(11) **EP 3 330 493 B1**

(12) **EUROPEAN PATENT SPECIFICATION**

(45) Date of publication and mention of the grant of the patent:
**01.05.2019 Bulletin 2019/18**

(51) Int Cl.:
*F01D 21/04* (2006.01)   *F02C 9/28* (2006.01)
*G01L 5/00* (2006.01)   *F16C 19/52* (2006.01)

(21) Application number: **16202041.6**

(22) Date of filing: **02.12.2016**

(54) **CONTROL SYSTEM AND METHOD FOR A GAS TURBINE ENGINE**

STEUERUNGSSYSTEM UND -VERFAHREN FÜR EINEN GASTURBINENMOTOR

SYSTÈME DE COMMANDE ET PROCÉDÉ POUR MOTEUR DE TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.06.2018 Bulletin 2018/23**

(73) Proprietor: **Rolls-Royce Deutschland Ltd & Co KG**
**15827 Blankenfelde-Mahlow (DE)**

(72) Inventors:
• **ELGEZABAL GÓMEZ, Oroitz**
**20600 Eibar (ES)**
• **KRAVCHENKO, Victor**
**12105 Berlin (DE)**

(74) Representative: **Maikowski & Ninnemann Patentanwälte Partnerschaft mbB**
**Postfach 15 09 20**
**10671 Berlin (DE)**

(56) References cited:
EP-A1- 3 015 659      EP-A2- 1 148 261
WO-A1-2014/174097      GB-A- 2 109 482
US-A- 4 578 018

**Description**

The invention relates to a gas turbine engine with the features of claim 1 and to a method for controlling a gas turbine engine according to claim 8.

Known control systems for gas turbine engines use multiple separate sensors for measuring an angular speed of the shaft, a torque of the shaft, and a detection of imbalances in the shaft. Other known control systems perform indirect measurements and apply mathematical models to estimate an actual thrust of the gas turbine engine.

Furthermore, known control systems apply reactive systems to apply countermeasures in case that the shaft is rotating at an overspeed, e.g., with an angular velocity beyond its design limits. An overspeed may result in breaking the shaft.

A known method to countermeasure a shaft break is to incorporate a mechanic system which in case that the gas turbine engine suffers an overspeed event, shuts-off the fuel supply to the combustion chamber. However, this overspeed protection is only triggered once the shaft break event has taken place.

GB 669 438 A describes an overspeed control means with a centrifugal brake comprising a carrier, rotatable with the shaft. When the carrier is rotating, projections exert a force tending to rotate plates relative to the carrier but are unable to do so owing to a pin. At a predetermined speed the pin shears and the projections can move. Shoes may then move out centrifugally into contact with a drum and brake the starter. Such mechanical systems require a lot of regular maintenance and must be replaced after activation. Additionally, such systems are not allowed anymore without regular automatic testing for avoiding dormant failures.

DE 10 2010 024 850 A1 describes the use of piezoresistive sensors for measuring a revolution speed of a rotatable component.

EP 3 015 659 A1 describes a bearing apparatus comprising an inner race, an outer race, a roller element there between, a first sensor to sense displacement of one of the inner race, the outer race, and the roller element, and to provide a first signal for the sensed displacement to enable a load on the bearing apparatus to be determined.

EP 1 148 261 A2 relates to a bearing having a sensor unit integrated into a component of the bearing. The sensor unit is an acoustic-electronic element in which at least a part of a substrate surface is equipped with piezoelectric properties.

It is an object of the present invention to provide an improved control system.

The object is solved by a gas turbine engine having a control system comprising a processing unit and a bearing with the features of claim 1.

Such a control system comprises at least one piezoelectric element and a processing unit. The bearing is connectable or connected to a shaft of the gas turbine engine and is adapted to support the shaft. The piezoelectric element is arranged at the bearing (in particular arranged on or in the bearing) and is adapted to create information indicative for a force acting on the bearing and provide the information to the processing unit. The processing unit is adapted to determine a thrust force of the gas turbine engine based on the information provided by the piezoelectric element. The bearing may be a part of the control system.

The shaft may drive or be adapted to drive at least one compressor and/or fan stage of the gas turbine engine. The gas turbine engine may particularly be an aircraft engine. The processing unit may be a part of an electronic engine control (EEC) of the gas turbine engine.

The piezoelectric element may particularly be a piezoresistive element and/or sensor. The piezoelectric element is arranged at the bearing such that a flux of force due to a force acting on the bearing, e.g. by the shaft, is directed through the piezoelectric element. The piezoelectric element is sensitive for a flux of force directed through it. Information containing a measurement value regarding the flux of force directed through the piezoelectric element is thereby indicative for a force acting on the bearing. The piezoresistive sensor may be produced by pressure-injection moulding.

The invention is based on the idea to use information from components of a gas turbine engine that has not been accessible before, in particular forces acting on shaft bearings.

In addition to the determination of the thrust force, the processing unit may be adapted to determine a rotational motion of the shaft, in particular an angular speed and/or an angular acceleration, based on periodic characteristic signals contained in the information provided by the at least one piezoelectric element.

The processing unit may be adapted to determine an imbalance, an overspeed and/or a break of the shaft based on variations in time of characteristic signals contained in the information provided by the at least one piezoelectric element.

The object is also solved by a control system for a gas turbine engine, comprising at least one piezoelectric element and at least one second piezoelectric element, and a processing unit, which may be designed as described above. Therein it is provided that the at least one piezoelectric (in particular piezoresistive) element is arranged at a bearing of the control system, the bearing being adapted to support a shaft of the gas turbine engine. The piezoelectric element is adapted to create information indicative for a force acting on the bearing and provide the information to the processing unit. The at least one second piezoelectric (in particular piezoresistive) element is arranged at a second bearing of the control system, the second bearing being adapted to support the shaft. The at least one second piezoelectric element is adapted to create information indicative for a force acting on the second bearing and provide the information to the processing unit. The bearing and the second bearing may be a part of the control system.

The first and second bearings may be spaced from each other along the shaft, in particular along a rotational axis of the shaft.

According to an embodiment, the processing unit is adapted to determine a torque, in particular an overtorque exceeding a predefined value of the torque, a bending, an overbending, a mechanical power and/or a mechanical efficiency of the shaft based on the information provided by the at least one piezoelectric element and the at least one second piezoelectric element.

Two or more, in particular a plurality, in particular more than ten or more than 100 piezoelectric elements may be arranged at the bearing (and/or the second bearing) at different locations of the bearing and/or in different orientations with respect to each other. In particular, the piezoelectric elements may be arranged along a (e.g. inner or outer) circumference of a stationary bearing part encompassing a rotatable bearing part. The rotatable bearing part may be fixed to the shaft. The stationary bearing part may be fixed to a stationary structure of the gas turbine engine with respect to which the shaft is rotatable. By such an arrangement, forces acting on the bearing in two or three orthogonal spatial directions are measurable by means of the processing unit based on information from the two or more piezoelectric elements.

According to an embodiment (with one or two bearings), the processing unit is adapted to steer an operation of the gas turbine engine on the basis of at least one parameter of the gas turbine engine determined by the processing unit based on the information provided by the at least one piezoelectric element (and/or the at least one second piezoelectric element). The parameter is, e.g., an angular speed, an angular acceleration, imbalance, an overspeed, a break, torque, a bending, a mechanical power and/or a mechanical efficiency of the shaft. In this manner, it is possible to prevent the shaft from being operated in states that may damage the shaft and to prevent a shaft breakage. Therefore, the lifetime of the shaft may be extended by means of the control system. It also possible to monitor stress cycles experienced by the shaft, in particular in order to generate stress-cycle data. The stress-cycle data may serve as a basis for condition-based maintenance.

The object is also solved by a gas turbine engine, in particular an aircraft engine, comprising a control system according to any aspect or embodiment described herein. The gas turbine engine comprises one or a plurality of shafts driving a compressor and/or fan stage and/or being driven by a turbine stage. The bearing and/or a second bearing of the control system are fixed to the shaft. For example, the bearing and/or the second bearing of the control system are fixed to a low-pressure shaft of the gas turbine engine. Alternatively or additionally, a bearing and/or a second bearing of the control system are fixed to an intermediate-pressure shaft and/or to a high-pressure shaft of the gas turbine engine.

The object is also solved by a method for controlling a gas turbine engine, wherein at least one piezoelectric (in particular piezoresistive) element is arranged at a bearing, the bearing being adapted to support a shaft of the gas turbine engine. Therein, the piezoelectric element creates and provides information indicative for a force acting on the bearing to a processing unit. The processing unit determines a thrust force of the gas turbine engine based on the information provided by the piezoelectric element.

The method may use a control system according to any aspect or embodiment described herein.

The processing unit may determine a rotational motion of the shaft, in particular an angular speed and/or an angular acceleration, based on periodic characteristic signals within the information provided by the at least one piezoelectric element.

According to an embodiment, the processing unit determines an imbalance, an overspeed and/or a break of the shaft based on variations in time of characteristic signals within the information provided by the at least one piezoelectric element.

The object is also solved by a method for controlling a gas turbine engine, wherein at least one piezoelectric (in particular piezoresistive) element is arranged at a bearing, the bearing being adapted to support a shaft of the gas turbine engine, and the piezoelectric element creates and provides information indicative for a force acting on the bearing to a processing unit. At least one second piezoelectric (in particular piezoresistive) element is arranged at a second bearing adapted to support the shaft, and the second piezoelectric element creates and provides information indicative for a force acting thereon to the processing unit.

The processing unit may determine a torque, a bending, a mechanical power and/or a mechanical efficiency of the shaft based on the information provided by the at least one piezoelectric element and the at least one second piezoelectric element.

Two or more piezoelectric elements may be arranged at the bearing (and/or the second bearing) at different locations and/or in different orientations, in particular around a circumference of a stationary bearing part encompassing a rotatable bearing part.

According to an embodiment, the processing unit steers an operation of the gas turbine engine on the basis of at least one parameter of the gas turbine engine determined by the processing unit based on the information provided by the at least one piezoelectric element.

Embodiments of the invention are shown in the figures, where

| | |
|---|---|
| Fig. 1 | shows a schematic drawing of a gas turbine engine for an aircraft; |
| Fig. 2 | shows a cross-sectional view of a fan blade of the gas turbine engine according to Fig. 1; |
| Fig. 3 | shows a schematic illustration of aerodynamic forces acting on a fan of the gas turbine engine according to Fig. 1; |
| Fig. 4 | shows a cross-sectional view of a turbine blade of the gas turbine engine according to Fig. 1; |
| Fig. 5 | shows a schematic illustration of aerodynamic forces acting on a turbine of the gas turbine engine according to Fig. 1; |
| Fig. 6 | shows a schematic drawing of a low-pressure shaft of the gas turbine engine according to Fig. 1 under normal operational conditions; |
| Fig. 7 | shows a schematic drawing of the low-pressure shaft according to Fig. 6 under exceptional operational conditions; |
| Fig. 8 | shows a schematic drawing of an embodiment of a control system for a gas turbine engine; |
| Fig. 9 | shows a schematic drawing of an embodiment of a control system for a gas turbine engine; |
| Fig. 10 | shows a schematic drawing of a piezoresistive sensor; |
| Fig. 11 | shows a schematic drawing of various components of a processing unit of the control systems according to Fig. 8 and 9; |
| Fig. 12 | shows a schematic drawing of an arrangement of a plurality of piezoresistive sensors of the control system on a bearing of the gas turbine engine according to Fig. 1; |
| Fig. 13A, 13B | show schematic drawings of arrangements of piezoresistive sensors of the control system on a race track of a bearing of the gas turbine engine according to Fig. 1; |
| Fig. 14 | shows a schematic drawing of the arrangement according to Fig. 13A in an orthogonal view and a schematic diagram of a corresponding circuitry; |
| Fig. 15 | shows a schematic drawing of a plurality of piezoresistive sensors and thermistors coupled to a processing unit of the control system; |
| Fig. 16 | shows a block diagram of a data processing chain within a speed data validator of the processing unit according to Fig. 15; |
| Fig. 17 | shows an illustration of different methods for determining an angular speed in a schematic drawing; |
| Fig. 18 | shows a block diagram of a data processing chain within a force data validator of the processing unit according to Fig. 15; |
| Fig. 19 | shows a block diagram of a data processing chain within a force validator of the force data validator according to Fig. 18; |
| Fig. 20 | shows a block diagram of a data processing chain of an acceleration data calculator and a torque data calculator of the processing unit according to Fig. 15; |
| Fig. 21 | shows a schematic drawing of a shaft torsion due to application of a torque; and |
| Fig. 22 | shows a block diagram of a data processing chain of a shaft power calculator of the processing unit according to Fig. 15. |

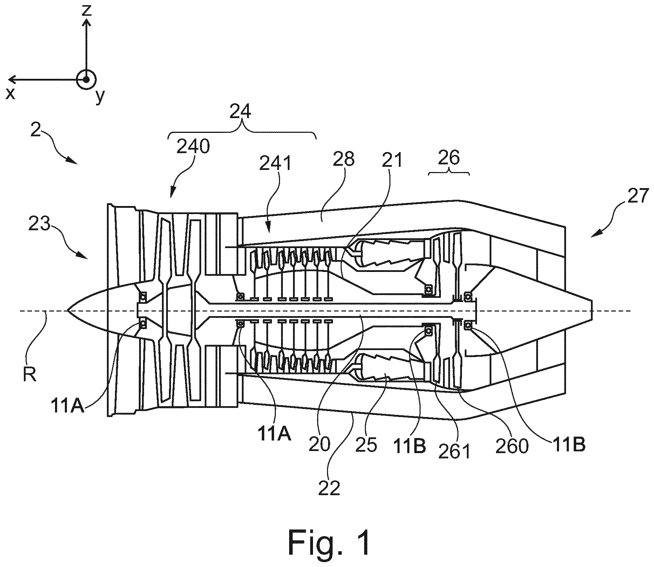

With reference to Fig. 1, a gas turbine engine for an aircraft is generally indicated at 2. The direction of travel is denoted by x, while y and z correspond to the other axes of an orthogonal coordinate system.

The gas turbine engine 2 comprises a plurality of shafts, presently two shafts 20, 21. The shafts 20, 21 both are rotatable around a common rotational axis R. The shafts 20, 21 are arranged within a housing 22 of the gas turbine engine 2. The housing 22 defines an air inlet 23 of the gas turbine engine 2.

An air flow steams through the air inlet 23 inside the gas turbine engine 2. The gas turbine engine 2 has an axial air flow direction. The air flow direction extends essentially along the rotational axis R of the shafts 20, 21. The gas turbine engine 2 comprises, behind the air inlet 23, a compressor 24, a combustion chamber 25, a turbine 26, and a nozzle 27, as seen essentially along the air flow direction.

The gas turbine engine 2 presently has two stages. One of the shafts 20, 21 serves as a low-pressure shaft 20, the other one serves as a high-pressure shaft 21. A low-pressure compressor 240 of the compressor 24 and a low-pressure-turbine 260 of the turbine 26 are fixed to the low-pressure shaft 20. A high-pressure compressor 241 of the compressor 24 and a high-pressure-turbine 261 of the turbine 26 are fixed to the high-pressure shaft 21.

Both the low-pressure and the high-pressure compressors 240, 242 each comprise several compressor stages. The first stage of the low-pressure compressor 240 may be referred to as fan.

The gas turbine engine 2 operates in a generally known manner. The low-pressure compressor 240 and the high-pressure-compressor 241 compress a first air flow of the incoming air and provide the compressed air to the combustion chamber 25 for combustion. Hot exhaust gases leaving the combustion chamber 25 are expanded in the high-pressure turbine 261 and in the low-pressure turbine 260 before they exit through the nozzle 27 to provide propulsive thrust.

A second air flow entering the air inlet 23 and accelerated by the fan 240 flows through a bypass duct 28 to provide additional propulsive thrust. The bypass duct 28 surrounds the compressor 24, the combustion chamber 25 and the turbine 26.

The low-pressure turbine 260 drives the low-pressure compressor 240 via the low-pressure shaft 20. The high-pressure turbine 261 drives the high-pressure compressor 241 via the high-pressure shaft 21.

Both shafts 20, 21 are supported by suitable bearings 11A, 11B. The shafts 20, 21 are supported such as being rotatable around the rotational axis R with respect to a stationary engine structure fixedly coupled to the housing 22. The stationary engine structure is fixed or can be fixed to the aircraft.

According to Fig. 1 the low-pressure shaft 20 and the high-pressure shaft 21 each comprise a front bearing 11A in the region of their respective front end facing the air inlet 23. The front bearings 11A are, e.g., designed as ball bearings. On their respective rear end facing the nozzle 27, the low-pressure shaft 20 and the high-pressure shaft 21 each comprise a rear bearing 11B. The rear bearings 11B are designed, e.g., as roller bearings.

The high-pressure shaft 21 is designed as a hollow shaft. The low-pressure shaft 20 is arranged within the high-pressure-shaft 21. Both shafts 20, 21 are arranged coaxial to one another.

Thrust induced into the shafts 20, 21 of the gas turbine engine 2 is transferred to the aircraft via the respective front bearing 11A, as will be explained in detail below.

Every compressor stage 240, 241 and turbine stage 260, 261 comprises a disc and a discrete number of n blades 242 and k blades 262, respectively, mounted to the disc and radially distributed in equal intervals, separated by an angle $\delta$ (compressor stage 240) and an angle $\sigma$ (turbine stage 260), respectively. The blades 242, 262 are airfoils which transform the mechanical energy present in the shaft 20, 21 into pressure in the compressor 24 and thermal energy contained in the exhaust gases into mechanical energy in the shaft 20, 21 within the turbine 26, respectively.

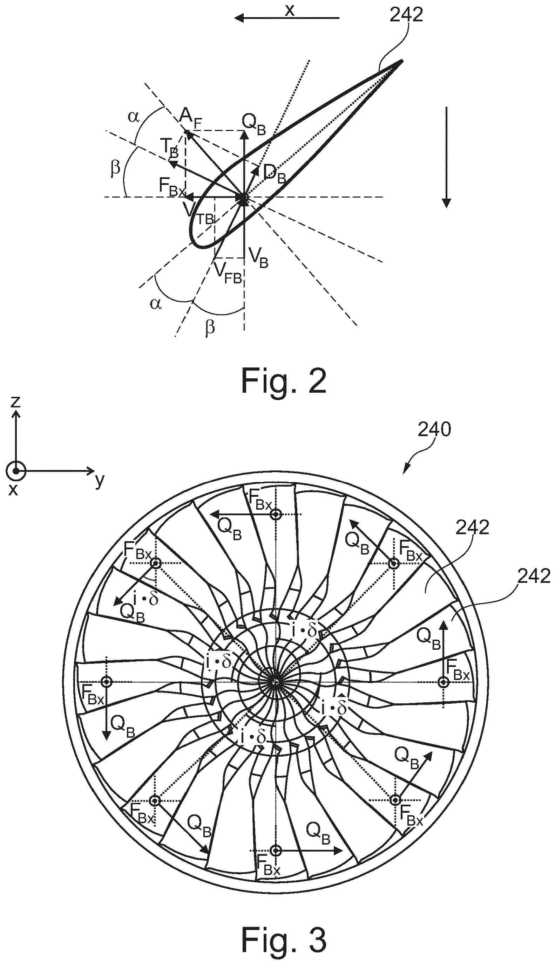

With particular reference to Fig. 2 and 3, the forces acting on the fan of the low-pressure compressor 240 are described.

When the air flows through the low-pressure compressor 240, in particular through the fan, every blade 242 of the fan experiences aerodynamic forces in accordance with the airfoil theory. Fig. 2 shows the translational speed $V_B$ of the fan blade 242, the speed of the air $V_{TB}$ flowing around the fan blade 242, and the relative speed between them $V_{FB}$. Additionally, Fig. 2 further shows the aerodynamic force $A_F$ produced by the air flowing around the fan blade 242 together with its associated thrust $T_B$ and drag $D_B$, as well as the axial force $F_{Bx}$ and the resistance to the rotation $Q_B$ derived from them. With an angle $\alpha$ between the aerodynamic force $A_F$ and the thrust $T_B$, and an angle $\beta$ between the thrust $T_B$ and the aerodynamic force in x direction $F_{Bx}$ it follows that:

$$Q_B = A_F \cdot \sin(\alpha + \beta)$$

$$F_{Bx} = A_F \cdot \cos(\alpha + \beta)$$

Applying dynamic equilibrium of forces in x direction and substituting the forces in x direction $F_{Bx}$ on each blade 242 as shown in Fig. 3, leads to the total aerodynamic force of one low-pressure compressor 240 stage in x direction:

$$F_{BXT} = n \cdot F_{Bx} = M_B \cdot a_{Bx}$$

Where $M_B$ is the mass of the low-pressure compressor 240 stage, and $a_{Bx}$ is the acceleration experienced by the low-pressure shaft fan 240 in x direction.

Since the fan of the low-pressure compressor 240 is symmetric, the forces in y axis direction as well as in z axis direction on both sides of the symmetry axis neutralize themselves. Therefore, $a_y = 0$ and $a_z = 0$.

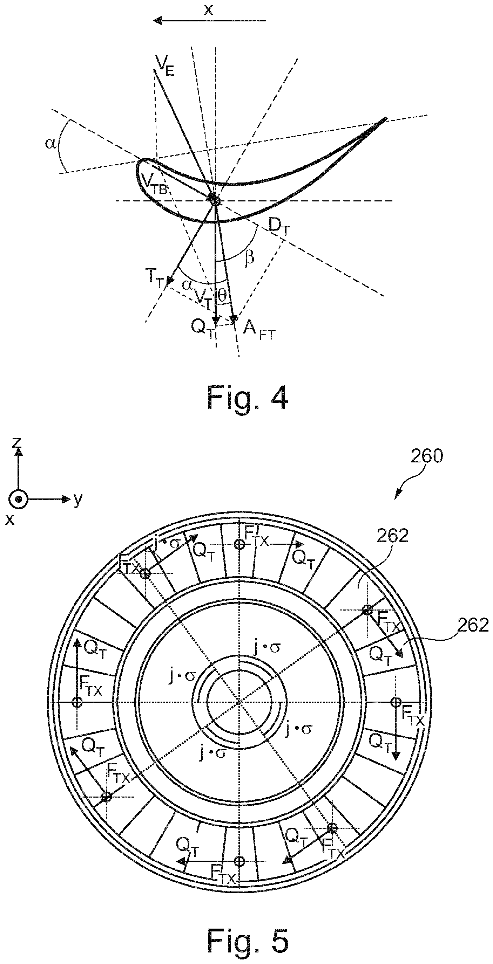

Now turning particularly to Fig. 4 and 5, the forces acting on a stage of the low-pressure turbine 260 are described.

Applying dynamic equilibrium of torques in x, y and z direction, the resistance to the rotation $Q_T$, and the aerodynamic force in x direction $F_{Tx}$ acting on each turbine blade 262, are computed from the aerodynamic force $A_{FT}$ and an angle $\theta = \alpha + \beta - 90$ as

$$Q_T = A_{FT} \cdot \sin(\theta)$$

$$F_{Tx} = A_{FT} \cdot \cos(\theta)$$

Therein, $\alpha$ is the angle between the aerodynamic force $A_{FT}$ and the thrust $T_T$, and $\beta$ is the angle between the resistance to the rotation $Q_T$ and the drag $D_T$.

In Fig. 4, $V_E$ corresponds to the linear speed of the exhaust gases and $V_T$ denotes the linear speed of the turbine blade 262.

Applying dynamic equilibrium of forces in x direction and substituting the forces in x direction $F_{Tx}$ on each blade 262 as shown in Fig. 5, leads to the total aerodynamic force of one low-pressure turbine 260 stage in x direction

$$F_{TXT} = k \cdot F_{Tx} = M_T \cdot a_{Tx}$$

Where $M_T$ is the mass of the low-pressure turbine 260 stage, and $a_{Tx}$ is the acceleration experienced by the low-pressure turbine 260.

Since the stage of the low-pressure turbine 260 is symmetric, the forces in y axis direction as well as in z axis direction on both sides of the symmetry axis neutralize themselves. Therefore, $a_y = 0$ and $a_z = 0$.

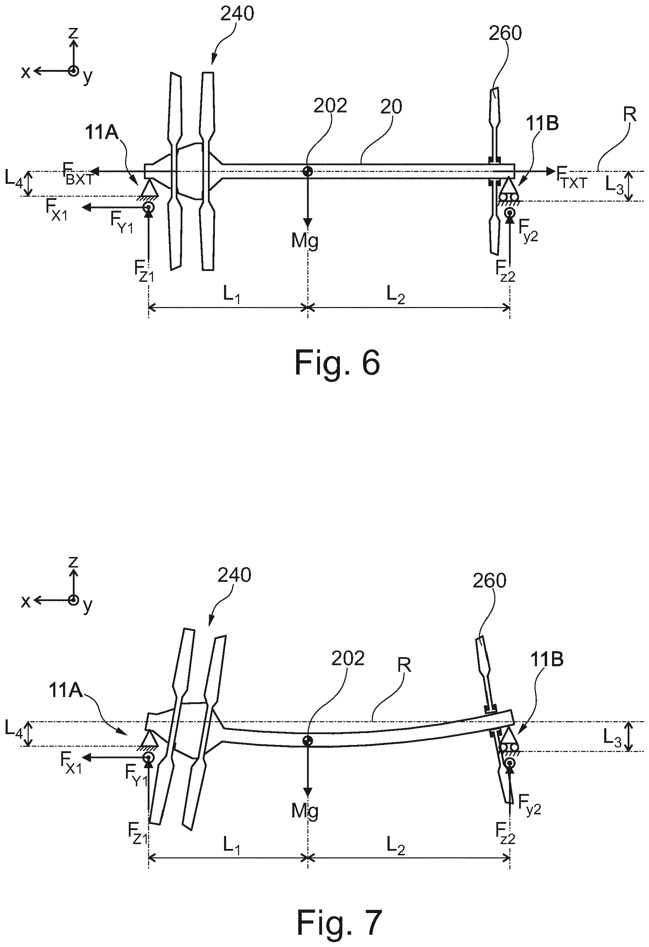

Fig. 6 shows the low-pressure shaft 20, the low-pressure compressor 240 and the low-pressure turbine 260. The low-pressure shaft 20 is supported by the front and rear bearings 11A, 11B.

In Fig. 6, the forces $F_{x1}$, $F_{y1}$, $F_{z1}$ acting on the front bearing 11A in the x, y and z directions are shown. Also the forces $F_{y2}$, $F_{z2}$ acting on the rear bearing 11B in the y and z directions are shown. The rear bearing 11B is designed as a roller bearing and thus allows a movement of the low-pressure shaft 20 in x direction to a certain extent. Therefore, no forces or essentially no forces are transferred from the low-pressure shaft 20 through the rear bearing 11B in the x direction.

M is the mass of the low-pressure stage including the low-pressure shaft 20, the low-pressure compressor 240 and the low-pressure turbine 260, having a centre of gravity 202; g is the gravitational acceleration. $L_1$ is the distance in x direction between the front bearing 11A and the center of gravity 202 of the low-pressure stage. $L_2$ is the distance in x direction between the center of gravity 202 of the low-pressure stage and the rear bearing 11B. $L_3$ is the distance in z direction between the rear bearing 11B and the rotational axis R. $L_4$ is the distance in z direction between the front bearing 11A and the rotational axis R.

The force $F_{x1}$ acting on the front bearing 11A in the x direction may be calculated as follows:

$$F_{x1} = M \cdot a_x - F_{BXT} + F_{TXT} \qquad (1)$$

Therein, $a_x$ is the acceleration of the low-pressure shaft 20 in x direction.

$F_{x1}$ is the thrust force of the low-pressure shaft 20. The sum of the thrust forces of all shafts 20, 21 of corresponds to the total thrust force of the gas turbine engine 2.

The force $F_{y1}$ acting on the front bearing 11A in the y direction is related to the force $F_{y2}$ acting on the rear bearing 11B in the y direction as follows:

$$F_{y1} + F_{y2} = M \cdot a_y \qquad (2)$$

Therein, $a_y$ is the acceleration of the low-pressure shaft 20 in y direction. The force $F_{z1}$ acting on the front bearing 11A in the z direction is related to the force $F_{z2}$ acting the rear bearing 11B in the z direction as follows:

$$F_{z1} + F_{z2} - M \cdot g = M \cdot a_z \qquad (3)$$

When there is no translation of the low-pressure shaft 20 in z direction, then $a_z = 0$:

$$F_{z1} = M \cdot g - F_{z2} \qquad (4)$$

Applying dynamic equilibrium of torques in the x, y and z directions yields:

$$F_{y1} \cdot L_4 + F_{y2} \cdot L_3 + n_B \cdot Q_B \cdot R_B - n_T \cdot Q_T \cdot R_T = I_{xx} \cdot \alpha_x$$

$$F_{z2} \cdot L_2 - F_{z1} \cdot L_1 = I_{yy} \cdot \alpha_y$$

$$F_{y1} \cdot L_1 - F_{y2} \cdot L_2 = I_{zz} \cdot \alpha_z \qquad (5)$$

During a normal operation of the low-pressure shaft 20, there are essentially no radial accelerations and $\alpha_y = 0$ and $\alpha_z = 0$. As a result, the forces $F_{y1}$, $F_{z1}$ acting on the front bearing 11A in the y and z directions and the forces $F_{y2}$, $F_{z2}$ acting on the rear bearing 11B in the y and z directions are related to each other as follows:

$$F_{y1} = \frac{L_2}{L_1} \cdot F_{y2}$$

$$F_{z1} = \frac{L_2}{L_1} \cdot F_{z2} \qquad (6)$$

Applying equilibrium of torques in y direction in the front bearing 11A, by means of the parallel axis theorem it follows:

$$F_{BXT} \cdot L_4 + F_{z2} \cdot (L_1 + L_2) - Mg \cdot L_1 - F_{TXT} \cdot L_3 = (I_{yy} + ML_1^2) \cdot \alpha_y \qquad (7)$$

Applying equilibrium of torques in y direction in the rear bearing 11B, by means of the parallel axis theorem it follows:

$$F_{BXT} \cdot L_4 + Mg \cdot L_2 - F_{TXT} \cdot L_3 - F_{z1} \cdot (L_1 + L_2) - F_{x1} \cdot (L_3 - L_4) = (I_{yy} + ML_2^2) \cdot \alpha_y \qquad (8)$$

By means of the above analysis, it is possible to determine the torque produced in the fan and in the turbine 26 for measuring the torque applied to the shaft 20.

When the equilibrium of torques is not calculated around the center of gravity, the parallel axis theorem is necessary.

Fig. 7 shows the same components as Fig. 6; however, in Fig. 7 imbalances are acting on the low-pressure stage are resulting in a bending of the low-pressure shaft 20. The imbalances may be created by invisible defects in blades or other components.

As a result, the amplitudes of the forces $F_{y1}$, $F_{z1}$ acting on the front bearing 11A in the y and z directions and the forces $F_{y2}$, $F_{z2}$ acting on the rear bearing 11B in the y and z will change.

Furthermore, an overspeed of the gas turbine engine 2 may induce characteristic forces $F_{x1}$, $F_{y1}$, $F_{z1}$, $F_{y2}$, $F_{z2}$ on the front and/or rear bearings 11A, 11B.

The gas turbine engine 2 comprises a control system 1 for measuring the forces $F_{x1}$, $F_{y1}$, $F_{z1}$, $F_{y2}$, $F_{z2}$ of the low-pressure shaft 20 acting on the front and/or rear bearings 11A, 11B. The following description refers to the low-pressure shaft 20, but it is correspondingly applicable to other shafts of the gas turbine engine, such as the high-pressure shaft 21 or an intermediate-pressure shaft.

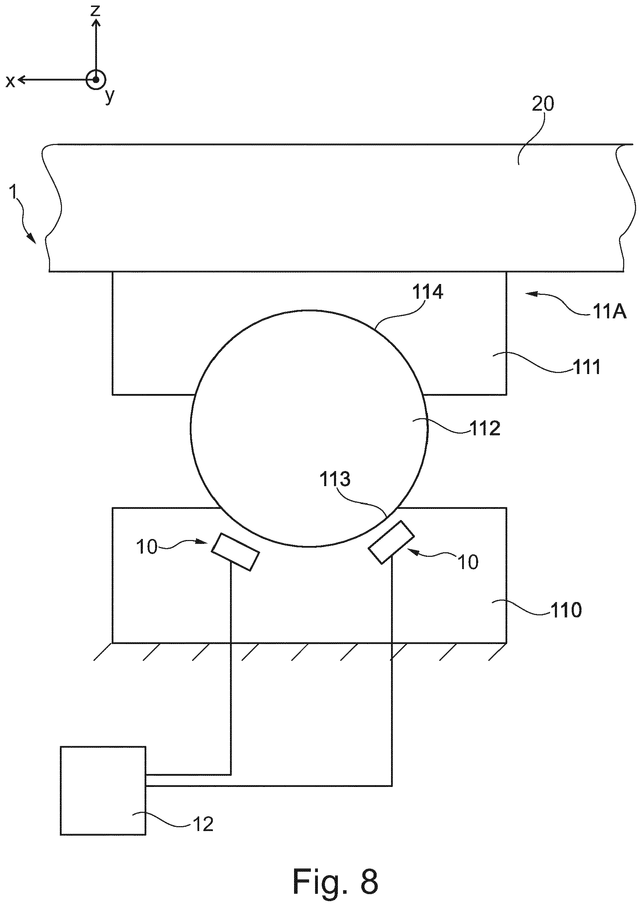

Fig. 8 shows an embodiment of a control system 1. The control system comprises a bearing 11A. The bearing 11A according to Fig. 8 is a front bearing of the low-pressure shaft 20.

The bearing 11A comprises a stationary bearing part 110 fixable or fixed to the stationary engine structure of the gas turbine engine 2. The bearing 11A further comprises a rotatable bearing part 111 fixable or fixed to the low-pressure shaft 20 of the gas turbine engine 2. The rotatable bearing part 111 is arranged inside the stationary bearing part 110. The stationary and rotatable bearing parts 110, 111 provide a ring-shaped race track 113, 114 for a plurality of rolling elements. According to Fig. 8, the rolling elements are provided in the form of bearing balls 112.

The control system 1 further comprises a plurality of piezoelectric elements in the form of piezoresistive sensors 10. The piezoresistive sensors 10 are arranged on or within the material of the stationary bearing part 110.

When the bearing balls 112 pass a piezoresistive sensor 10, the piezoresistive sensor 10 and/or the surrounding material of the stationary bearing part 110 experience a pressure and thus the piezoresistive sensor 10 provides a signal indicative for the corresponding force. When the bearing 11A is rotated, the plurality of bearing balls 112 act on each piezoresistive sensor 10 in a periodic manner, thereby creating a characteristic periodic signal.

The piezoresistive sensors 10 are operatively connected to a processing unit 12. The signal is provided from the piezoresistive sensors 10 to the processing unit 12 which determines a rotational speed and/or acceleration on the basis of the signals.

The processing unit 12 may be a part of an electronic engine control (EEC) of the gas turbine engine 2.

When the low-pressure shaft 20 experiences radial forces in the y and z directions, piezoresistive sensors 10 arranged at different positions around the low-pressure-shaft 20 experience different forces and provide corresponding different signals to the processing unit 12.

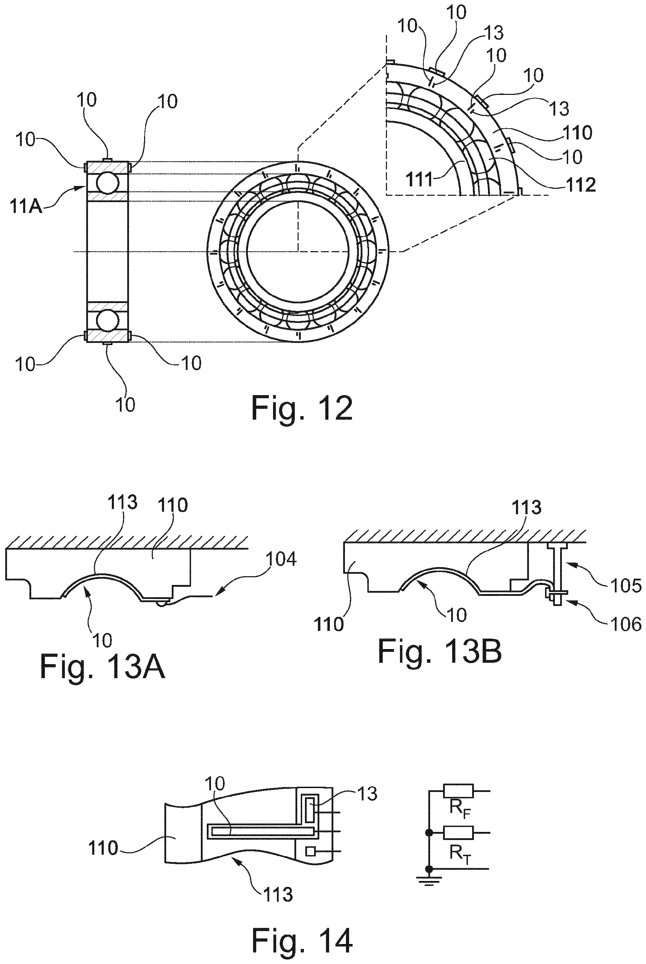

At least one of the piezoresistive sensors 10 is arranged such as to experience a force induced by the low-pressure shaft 20 acting along the x direction. According to Fig. 8, at least one piezoresistive sensor 10 is arranged before the center of the bearing ball 112 in x direction and will experience a force acting through the bearing ball 122 in x direction. At least one piezoresistive sensor 10 is arranged behind the center of the bearing ball 112 in x direction and will experience a force acting through the bearing ball 122 against the x direction. Fluxes of force transmitted through the bearing 11A are going through the piezoresistive sensors 10. The piezoresistive sensors 10 are arranged inclined (in particular around the y axis) with respect to one another. Another possible arrangement of the piezoresistive sensors 10 is shown in Fig. 12. Therein, piezoresistive sensors 10 are arranged on an outer surface of the bearing 11A, e.g. between the bearing 11A and a stationary part of the gas turbine engine 2. Two piezoresistive sensors 10 are arranged on opposite surfaces of the bearing, in particular in parallel with respect to one another and in particular at substantially the same angular location on the bearing 11A. Another piezoresistive sensor 10 is arranged between the opposing piezoresistive sensors 10 on a lateral surface of the bearing 11A. Piezoresistive sensors 10 are arranged at a plurality of angular locations on the bearing 11A.

The signals of the piezoresistive sensors 10 are provided to the processing unit 12, which determines a thrust force from the signals of the at least one piezoresistive sensor 10 indicative for a force in x direction. The processing unit 12 may control a target value of the thrust in dependence of the determined thrust force, and/or provide information indicative for the thrust force to an engine control controlling the thrust in dependence of the determined thrust force, e.g. by increasing or decreasing a fuel supply.

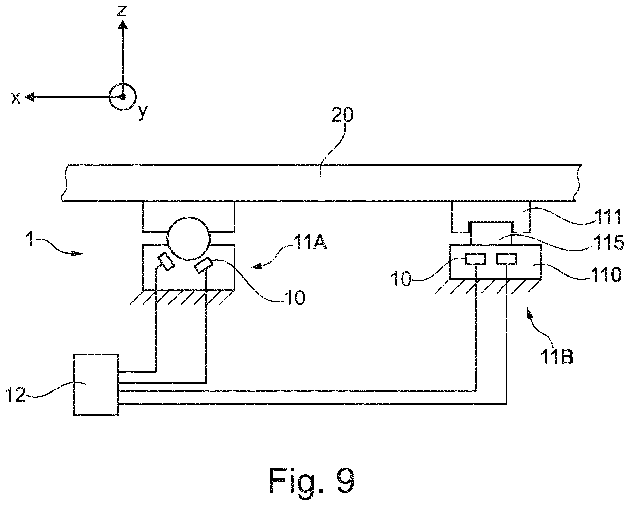

Fig. 9 shows an embodiment of a control system 1 comprising a front bearing 11A with a plurality of piezoresistive sensors 10, as the control system 1 according to Fig. 8. The control system 1 according to Fig. 9 additionally comprises a rear bearing 11B of the low-pressure shaft 20 (alternatively of the high-pressure shaft 21 or an intermediate-pressure shaft).

The rear bearing 11B is a roller bearing having a stationary bearing part 110 and a rotatable bearing part 111 defining a ring-shaped race track for a plurality of rollers 115. A plurality of piezoelectric elements in the form of piezoresistive sensors 10 are arranged on or within the material of the stationary bearing part 110 of the rear bearing 11B. The piezoresistive sensors 10 experience forces in the y and z directions. In x direction, the rollers are movable and essentially do not transmit force.

The piezoresistive sensors 10 are operatively connected to the processing unit 12.

An overspeed of the gas turbine engine 2 may induce characteristic forces $F_{x1}$, $F_{y1}$, $F_{z1}$, $F_{y2}$, $F_{z2}$ on the front and/or rear bearings 11A, 11B. In particular, for example due to an irregular movement of the shaft 20, forces acting on the front and rear bearings 11A, 11B may deviate in a characteristic manner. The processing unit 12 may compare signals provided by at least one piezoresistive sensor 10 of the front bearing 11A with signals provided by at least one piezoresistive sensor 10 of the rear bearing 11B. From the comparison, a characteristic deviation may be determined, so that an overspeed of the gas turbine engine 2 may be detected.

The processing unit 12 may control the gas turbine engine 2 in dependence of the detection of the overspeed, and/or provide information indicative for the detection of the overspeed to an engine control controlling the gas turbine engine 2 in dependence of the detection of the overspeed.

The control system 1 provides a low-pressure turbine overspeed protection and direct thrust control.

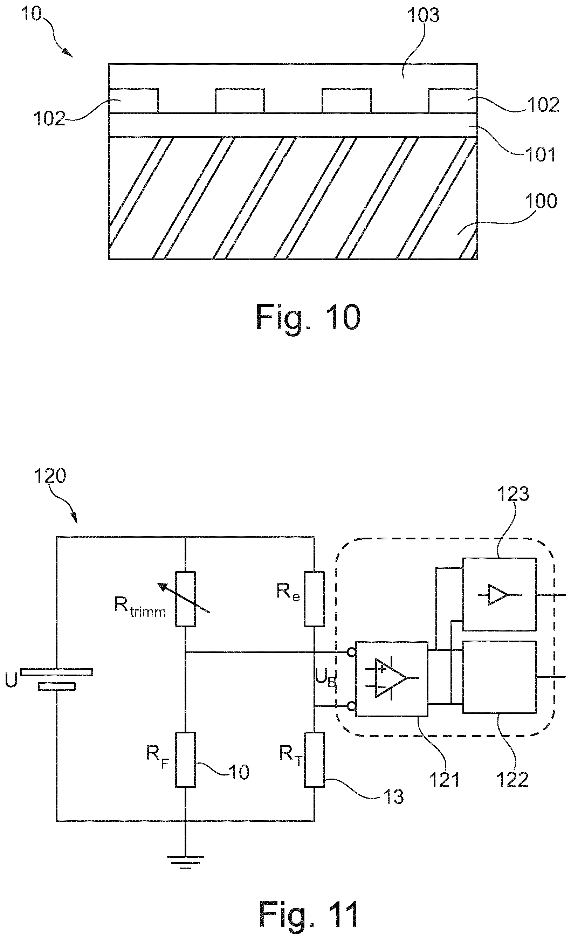

Turning now to Fig. 10, the piezoresistive sensors 10 will be described in more detail. The piezoresistive sensor 10 may comprise or may be formed as a thin-film force sensor (TFS) for determining the angular speed and acceleration of the low-pressure shaft 20, as well as the axial forces and torques transmitted through the low-pressure shaft 20. TFS are constituted by a series of thin films, whose sensing element consists of a piezoresistive layer 101 which changes its resistance when a pressure is applied to it.

Fig. 10 shows the composition of a piezoresistive sensor 10, showing several layers. As shown in the figure, the lowest layer is a substrate 100 providing support for the piezoresistive layer 101. The piezoresistive layer 101 is located in the middle of the piezoresistive sensor 10. The piezoresistive layer is in electric contact with electrodes 102.

The layer located at the top is a protective coating 103, which is adapted to protect the piezoresistive layer 101 and the electrodes 102 from the surrounding environmental conditions. This coating 103 can be implemented by using different materials which are capable of withstanding different elements, for example diamond coatings or diamondlike coatings for high temperature environments or other kinds of materials for liquid or corrosive environments.

The piezoresistive layer 101 changes its resistance $R_F$ essentially linearly when pressure is applied to it. In order to measure the force applied to the piezoresistive sensor 10, the change in resistance $R_F$ of the piezoresistive layer 101 due to the applied pressure is measured and multiplied by the area of the piezoresistive sensor 10. The piezoresistive sensor 10 is connected to the processing unit 12 by means of electric connections of two or more of the electrodes 102 with the processing unit 12.

The piezoresistive sensor 10 may be produced by pressure-injection moulding. A piezoresistive sensor 10 produced by pressure-injection moulding may be particularly robust and therefore withstand the tough environment and the strong forces in the gas turbine engine 2. The piezoresistive sensor 10 may be integrated into the bearing material. The piezoresistive sensor 10 may comprise a ceramics material.

Turning now to Fig. 11, in order to measure the applied pressure, the piezoresistive sensor 10 is implemented in a voltage divider circuit. A voltage U is applied to the circuit which generates a current flowing across the voltage divider. The output of the voltage divider depends on the value of the resistors in the voltage divider. When a pressure is applied to the piezoresistive sensor 10, its resistance $R_F$ changes, thus changing the output voltage provided by the voltage divider. In that way, the intensity of the pressure applied to the piezoresistive sensor 10 can be calculated as a function of the difference between the voltage delivered by the divider circuit when the pressure is applied, and the reference voltage it delivers when no pressure is applied.

Temperature variations also change the resistance $R_F$ of the piezoresistive layer 101. This introduces an offset and a drift in the voltage delivered by the sensor, which results in an incorrect value of the applied force. In order to compensate such temperature effects, an additional voltage divider is added in parallel to the pressure-sensing voltage divider. The additional voltage divider comprises a thermistor 13. The thermistor 13 has a temperature-dependent resistance $R_T$. The thermistor 13 may have a negative temperature coefficient (NTC) or a positive temperature coefficient (PTC), which may be selected depending on the behaviour of the piezoresistive layer 101 with the temperature.

Fig. 11 shows an arrangement of a temperature-compensated pressure-sensing circuit 120. The circuit 120 is arranged as a Wheatstone bridge. An output voltage $U_b$ of the circuit 120 is measured as the difference between the outputs of both voltage dividers and can be expressed as:

$$U_b = U \cdot \left[ \frac{1}{1 + \dfrac{R_F}{R_{trimm}}} - \frac{1}{1 + \dfrac{R_T}{R_e}} \right]$$

Therein, U is an input voltage, the resistances $R_e$ and $R_{trimm}$ are the known resistances used in the Wheatstone bridge.

The output voltage $U_b$ of the circuit 120 is amplified by an amplifier 121. The amplified output voltage $U_b$ is provided to a voltage-to-current converter 122 for force and torque measurement. The voltage-to-current converter 122 provides a standardized interface used in industrial automation, which at the same time can reduce or eliminate the introduction of electromagnetic noise in the measured value, and the loss of energy in the conductor due to the Joule effect.

The amplified output voltage $U_b$ is also provided to a buffer gate 123. The buffer gate 123 is adapted to digitalize the output voltage $U_b$ to provide a digitized signal. The digitized signal is used by the processing unit 12 to determine an absolute angular position of the bearing, a rotational speed measurement and/or an acceleration measurement.

The piezoresistive sensor 10 of the control system 1 is of a type increasing its resistance with increasing pressure. Alternatively, a sensor type decreasing its resistance with increasing pressure could be used. In the latter case, the amplified output voltage $U_b$ could be supplied to an inverter gate instead or in addition to the buffer gate 123.

The buffer gate 123 produces a logic low (0) or a logic high (1) state depending on whether or not the voltage fed into its input (the amplified output voltage $U_b$) is below or above a predefined threshold, respectively. In that way, when a force is applied to the piezoresistive sensor 10, the resistance $R_F$ of its piezoresistive layer 101 increases, as well as the output voltage $U_b$ of the circuit 120 (Wheatstone bridge). The amplified output voltage $U_b$ triggers the buffer gate 123 to switch from the logical low to the logical high state when the amplified output voltage $U_b$ is above the predefined switching threshold.

The circuit 120 (except the piezoresistive sensor 10 and the thermistor 13), the amplifier 121, the voltage-to-current converter 122 and/or the buffer gate 123 may be part of and/or arranged within the processing unit 12.

The control system 1 comprises a plurality of piezoresistive sensors 10 according to Fig. 10.

Fig. 12 shows an arrangement of the plurality of piezoresistive sensors 10 around the circumference of the bearing, more precisely, of the stationary part 110 of the front bearing 11A.

The piezoresistive sensors 10 are uniformly distributed on the radial and axial surfaces of the stationary part 110 (the outer ring) of the bearing 11A. The piezoresistive sensors 10 are located in two perpendicular planes. Forces acting in radial y, z and axial x directions may be measured by the piezoresistive sensors 10. The forces experienced by the low-pressure shaft 20 are transferred into the stationary engine structure (e.g. an engine pylon) through the front bearing 11A and through the piezoresistive sensors 10 located on its surfaces. According to Fig. 12 piezoresistive sensors 10 are arranged at parallel opposing side surfaces of the bearing 11A, and at its outer shell surface.

A thermistor 13 is arranged adjacent to each piezoresistive sensor 10 for temperature compensation. The resistance $R_T$ of the thermistor 13 may be modified by an applied force, e.g. as a consequence of a deformation in its form due to the applied force. The thermistor 13 may have a piezoresistive nature. A force-dependence of the thermistor 13 may create an error in the output voltage $U_b$ of the circuit 120, thus creating an error in the measured force. In order to avoid such a bias of the measured forces, the thermistors 13 according to Fig. 12 are arranged in a plane perpendicular to the direction in which the forces flow. For example, each thermistor 13 is oriented perpendicular to the adjacent piezoresistive sensor 10. A thermistor 13 may be formed in the same way as the piezoresistive sensors 10 (Fig. 10). It may be arranged adjacent to a piezoresistive sensor 10 such that a force applied to the bearing is not applied on the thermistor 13.

Each pair of piezoresistive sensor 10 and thermistor 13 may be implemented in a circuit 120 as shown in Fig. 11. Each piezoresistive sensor 10 and/or thermistor 13 may be implemented in a separate circuit 120 as shown in Fig. 11. Alternatively or additionally, piezoresistive sensors 10 and/or thermistors 13 may be implemented in a common circuit 120, e.g. by at least one parallel and/or serial connection.

Fig. 13A and 13B show alternative or additional possible arrangements of a piezoresistive sensor 10 on the race track 113 in the stationary bearing part 110 of the bearing 11A. The piezoresistive sensor 10 or a part of the piezoresistive sensor 10 may form at least a part of the race track 113. The piezoresistive sensor 10 may be contacted by the bearing balls 112 of the bearing 11A (or in a corresponding arrangement, by rollers 115 of the rear bearing 11B).

According to Fig. 13A, the piezoresistive sensor 10 is connected to the processing unit 12 via a connection wire 104.

According to Fig. 13B, the piezoresistive sensor 10 is connected to the processing unit 12 via a terminal 106 mounted on a bracket 105 fixed on a stationary part of the gas turbine engine 2.

The piezoresistive sensor 10 may comprise a plurality of individual channels, e.g. formed by the electrodes 102 (as shown in Fig. 10) being spaced from each other for example in x direction (in a direction perpendicular to the circulating race track 113). Each individual channel may be operatively connected to the processing unit 12 via a connection wire 104 or a terminal 106.

Fig. 14 shows the arrangement according to Fig. 13A in a perpendicular view, i.e., in a radial direction onto the race track 113. The piezoresistive sensor 10 has an elongate form and is oriented perpendicular to the direction of travel of the bearing balls 112 along the race track 113.

A thermistor 13 arranged adjacent to the piezoresistive sensor 10 is arranged besides the race track 113. The thermistor 13 is arranged on a rim of the stationary bearing part 110 next to the race track 113. The thermistor 13 has an elongated form and is oriented perpendicular to the piezoresistive sensor 10. The rim is not contacted by the bearing balls 112.

The stationary bearing part 110 is made of a conductive material and serves as an electric ground. The piezoresistive sensor 10 and the thermistor 13 each are electrically connected with the stationary bearing part 110. A ground cable is electrically connected with the stationary bearing part 110. Connecting cables are electrically connected with the piezoresistive sensor 10 and the thermistor 13, respectively. Said cables are connected with the circuit 120 according to Fig. 11.

The right-hand side of Fig. 14 shows the electric connections with the corresponding electric symbols.

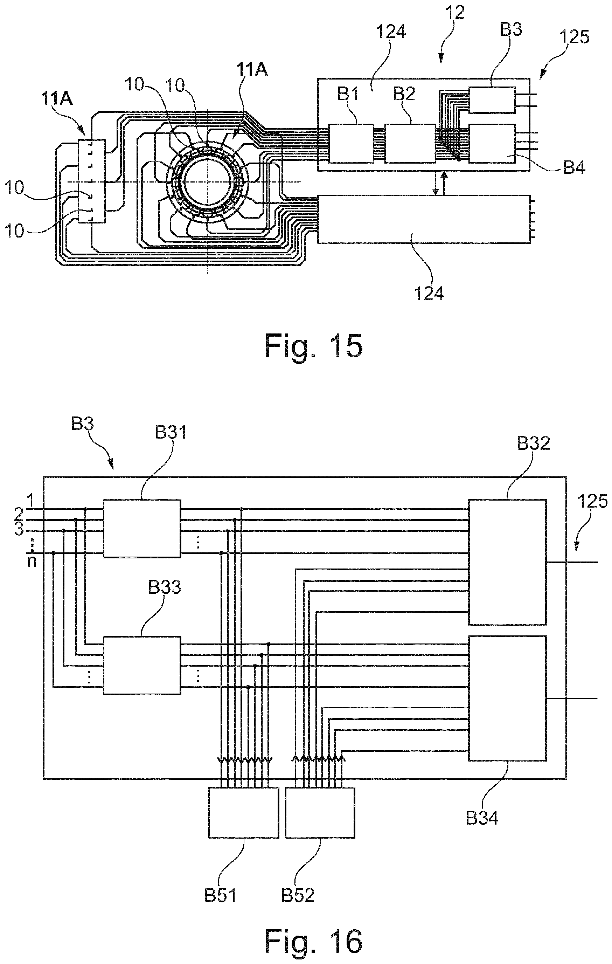

According to Fig. 15, the processing unit 12 has two channels 124. The piezoresistive sensors 10 located on the surfaces of the bearing 11A are evenly connected to the two channels 124 of the processing unit 12. Every half of the piezoresistive sensors 10 in axial and radial directions are operatively connected with a first and a second of the two channels 124. According to Fig. 15, along the surfaces of the bearing 11A, every second piezoresistive sensor 10 is operatively connected to the first channel, and every other piezoresistive sensor 10 is operatively connected to the second channel.

The channels 124 acquire and process signals received by the operatively coupled piezoresistive sensors 10.

Each channel 124 comprises a signal acquisition element B1 and a signal processor B2. The signal acquisition element B1 comprises, e.g., the circuit 120 according to Fig. 11. The signal processor B2 comprises, e.g., the amplifier 121 and/or the buffer gate 123 according to Fig. 11. The signal acquisition element B1 or the signal processor B2 may also comprise the voltage-to-current converter 122 according to Fig. 11.

An output of the signal processor B2 is provided to a speed data validator B3 of the digital signal processing channel 124. An output of the voltage-to-current converter 122 according to Fig. 11 is provided to a force data validator B4 of the digital signal processing channel 124.

Fig. 16 shows various components of the speed data validator B3. The speed data validator B3 comprises two main lanes of information flow. Each of the two lanes has a first and a second part.

The speed data validator B3 determines an angular speed of the low-pressure shaft 20 and/or a direction of rotation of the low-pressure shaft 20. The angular speed of the low-pressure shaft 20 is determined by the first lane, comprising an angular speed calculator B31 and an angular speed voter B32. The direction of rotation of the low-pressure shaft 20 is determined by the second lane, comprising a rotation direction calculator B33 and a rotation direction voter B34. Information indicative for the angular speed of the low-pressure shaft 20, and/or the direction of rotation of the low-pressure shaft 20 is provided by the speed data validator B3 at corresponding outputs 125.

Both lanes of the speed data validator B3 first calculate (by means of the calculators B31, B33) a value of the corresponding parameter based on the measurements acquired from the piezoresistive sensors 10. On a second step, both lanes determine a respective validated value of the parameter by means of the respective voter B32, B34, which considers a majority of or all piezoresistive sensors 10 of the bearing 11A, coming from both channels 124 of the processing unit 12.

For a check of the determined values, the speed data validator compares its results with the corresponding results of the other channel 124. For this purpose, both channels 124 are operatively connected to each by data transmitters B51, B52.

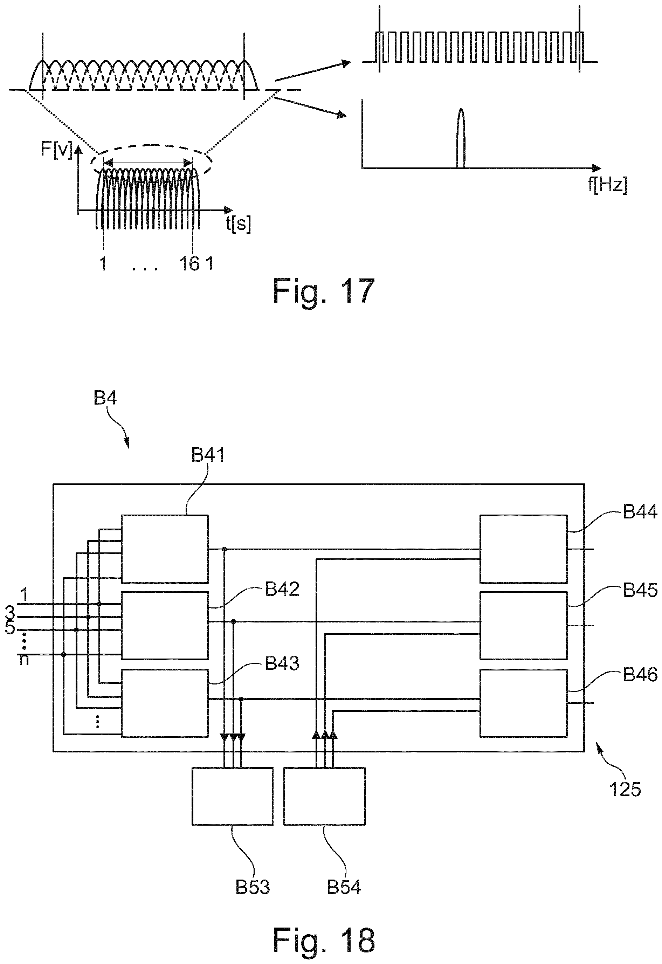

According to Fig. 17, the value of the angular speed of the low-pressure shaft 20 is calculated in a two-fold (duplex dissimilar) way. In this manner, a highly-reliable angular speed measurement may be provided.

The angular speed may be calculated taking into consideration the amount of time it takes the bearing 11A to produce a fixed pre-defined amount of pulses (being periodic characteristic signals) by one piezoresistive sensor 10. The specific amount of pulses to be counted is equal to the number of balls 112 contained in the ball bearing 11A. It is assumed that all the balls 112 of the bearing pass by the piezoresistive sensor 10 within one revolution of the shaft 20, 21. Therefore, the time span to count the pre-defined amount of pulses (equal to number of balls 112 in the bearing 11A) constitutes the period of one shaft 20, 21 rotation, indicated at the lower left of Fig. 17 showing the pulse height versus time. This time span is reciprocal to the rotational speed of the shaft, expressed in revolutions per unit of time.

Alternatively or additionally, the angular rotational speed of the low-pressure shaft 20 can be determined by calculating the frequency spectrum of the pulse train provided by the buffer gate 123 according to Fig. 11. This can be done by means of a Fourier analysis, in particular by means of a Fast Fourier Transform (FFT). The upper right of Fig. 17 shows the pulse train versus time provided by the buffer gate 123. The lower right of Fig. 17 shows a corresponding frequency spectrum.

Even though the frequency spectrum of the signal may spread across a broader range due to windowing effects, ideally it can be assumed that the frequency spectrum will concentrate on a single frequency, in this case, the one associated to the angular speed of the low-pressure turbine shaft. The frequency may be determined by applying a fit procedure and/or a peak-finder algorithm.

According to Fig. 18, the force data validator B4 comprises three main lanes, each composed of two parts. The force data validator B4 determines the forces applied to the front and rear bearings 11A, 11B in axial, horizontal radial, and vertical radial direction x, y, z. The lanes first determine a value of the forces associated to them based on the measurements acquired from the piezoresistive sensors 10 in an axial force calculator B41, a vertical radial force calculator B42, and a horizontal radial force calculator B43, respectively.

At a second step, the lanes determine a respective validated force value by means of a series of consecutive checks, by means of an axial force validator B44, a vertical radial force validator B45, and a horizontal radial force validator B46, respectively. The validators B44-B46 each produce a validated force value as an output value.

In the validators, B44-B46, the measure provided by the force calculators B41-B43 may be first checked by means of a range-check to ensure that it belongs to the set of theoretically feasible force values for that direction. Once the range-check has been passed, the measure of force is compared by means of a cross-check with the measure coming from the other channel 124. For this purpose, both channels 124 are operatively connected to each other by data transmitters B53, B54. The purpose of the cross-check is to detect in-range faults in any of both channels, by assessing if the measures calculated by both channels 124 differ beyond a certain pre-defined limit.

When both measures of the two channels 124 have been assessed to be valid, they are combined by the force validators B44-B46. Both measures are combined by calculating the average value of the two. Averaging the values ideally eliminates a random error present in both measures. Information indicative for the axial force, the vertical radial force, and the horizontal radial force is provided by the force validators B44-B46 at corresponding outputs 125.

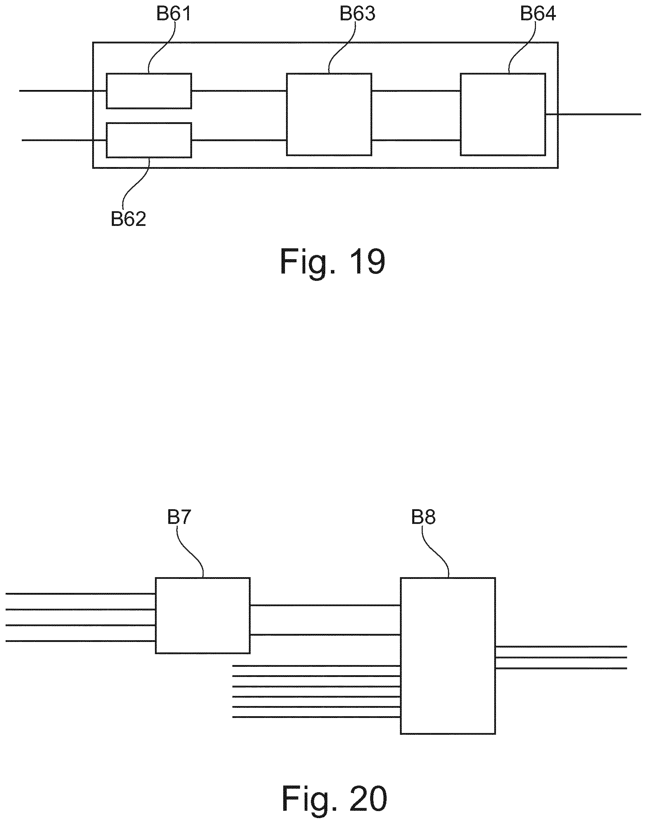

Fig. 19 shows a block diagram of a generic force validator for calculating a validated value of the forces applied to the front and rear bearings 11A, 11B. Two range checkers B61, B62 each receive a measured value of one of the two channels 124 by comparison to the pre-defined range. When the range check is passed, the measured value is provided by the range checkers B61, B62 to a cross-checker B63. When a difference between the values from both channels 124 is below the pre-defined limit, the values are provided to a calculator B64 calculating an average of the values and providing the average value as an output.

Since the only bearing restricting the movement of the low-pressure shaft 20 in axial direction x is the front bearing 11A, all the axial forces are transmitted to the aircraft structure through this bearing 11A and an engine pylon. Therefore, the validated axial force value measured in the front bearing 11A is the force produced as a reaction to the thrust generated by the gas turbine engine 2. For the engine control, the validated axial force value can be used as the feedback for the gas turbine engine 2 thrust control loop.

The advantage of such a direct thrust control compared to classic control methods (known as EPR and N1) may be twofold. On the one hand, since the piezoresistive sensors 10 measure the thrust of the low-pressure shaft 20 directly, there is no need to rely on mathematical models of the thermodynamic and dynamic behaviour of the gas turbine engine 2 as it is the case in the classic methods for controlling the thrust. On the other hand, the processing steps for feeding the value of thrust back into the control loops are only related to the acquisition and processing of the signals generated by the piezoresistive sensors 10. By this, the time required to close the control loop may be reduced, and therefore, oscillations in commands generated by the control loop can be reduced, making the control more robust.

Additionally (and as an added value when compared with known thrust control systems), the control system 1 also allows monitoring the whole torque path of the gas turbine engine 2. When any of the gas turbine engine 2 stages gets detached from the rest, the axial force will decrease in an unexpected manner, thus enabling the control system 1 to effect a cut-off of a fuel supply into the combustion chamber 25 in order to take the gas turbine engine 2 into a safe state.

The validated vertical radial force values of the front and back bearings 11A, 11B can be used to detect a rotor bow scenario as depicted in Fig. 7.

Turning again to Fig. 7, in a rotor bow scenario, the vertical radial forces $F_{z1}$, $F_{z2}$ will deviate from the ones present in a normal operating condition without rotor bow, such as shown in Fig. 6.

Additionally, as shown in Fig. 3 and Fig. 5, when the low-pressure fan 240 and turbine 260 are balanced, the symmetry of their discs with respect to y and z axes make that the forces in both directions at both sides of the symmetry axes compensate each other. The only resulting force acting on the discs is the axial force $F_x$ and the vertical force opposed to the weight force.

When the shaft is imbalanced due to any reason, including non-visible defects in blades or in low-pressure shaft 20 components, as the low-pressure shaft 20 rotates the vertical and horizontal radial forces $F_{y1}$, $F_{y2}$, $F_{z1}$, $F_{z2}$ will be different from zero. Therefore, the values of these forces can be used to trigger corrective maintenance tasks for maintaining the safety and reliability of the gas turbine engine 2.

According to Fig. 20, the angular speed and the direction of rotation of both the front and the back bearings 11A, 11B (supporting the low-pressure shaft 20), produced by the respective speed data validators B3, are forwarded to an acceleration data calculator B7.

The function of the acceleration data calculator B7 is to determine the angular acceleration of the low-pressure shaft 20 on the basis of its angular speed. The calculation in the acceleration data calculator B7 is carried out by means of the derivative of the angular speed of the low-pressure shaft 20.

The angular acceleration values of the front and rear bearing 11A, 11B are provided to a torque data calculator B8. The torque data calculator B8 also receives the force values of the front and back bearings 11A, 11B calculated by the force data validator B4 according to Fig. 18 as inputs. The torque data calculator B8 introduces these inputs in equations (1) to (8) above to calculate the torques applied in the front and the rear bearings 11A, 11B. The torque data calculator B8 also introduces the inputs in equations (1) to (8) above to calculate the total torque transmitted through the low-pressure shaft 20. The total torque may be calculated as the difference between the torque in the front bearing and in the back bearing.

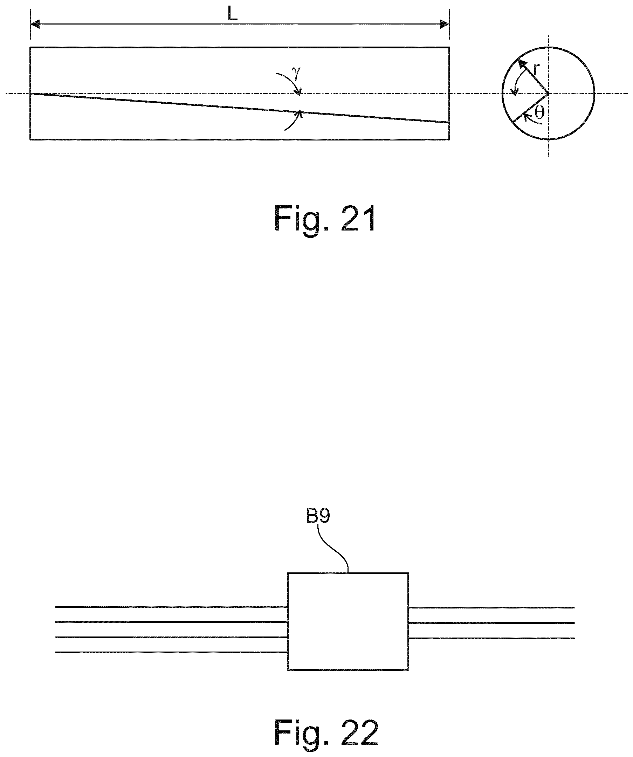

Torsion occurs when a shaft is subjected to a torque. This is true whether the shaft is rotating (such as drive shafts on engines) or stationary (such as with a bolt or screw). The torque makes the shaft twist and one end rotates relative to the other inducing shear stress on any cross section, as shown in Fig. 21 for a shaft (for example the low-pressure shaft 20) with a length L and a radius r.

A failure of the shaft might occur due to shear alone or because the shear is accompanied by a stretching or bending.

If it is assumed that the two arcs $\gamma$ and $\theta$ are the same (the two arcs $\gamma$ and $\theta$ may differ when there is plastic deformation of the shaft), it follows that:

$$R\theta = L\gamma \rightarrow \gamma = \frac{R\theta}{L} \qquad\qquad (9)$$

According to basic stress and strain theory, it can be stated that $\gamma$ is the shear strain on the outer surface of the shaft. The relationship between shear strain and shear stress is:

$$G = \frac{\tau}{\gamma} \qquad\qquad (10)$$

Where T is the shear stress and G the modulus of rigidity. G is one of the elastic constants of a material. The equation is only true as long as the material remains elastic.

Substituting equation (9) into (10):

$$\frac{G\theta}{L} = \frac{\tau}{R} \qquad (11)$$

Since the derivation could be applied to any radius, it follows that shear stress is directly proportional to radius r and is a maximum on the surface. Equation (11) could be written as:

$$\frac{G\theta}{L} = \frac{\tau}{r} \qquad (12)$$

Consider an elementary ring of material with a shear stress T acting on it at radius r.

The area of the ring is

$$dA = 2\pi r dr$$

The shear force tangentially acting on it is

$$dF = \tau dA = \tau 2\pi r dr$$

The force acts at a radius r so the torque produced is

$$dT = \tau 2\pi r^2 dr$$

Since $\tau = \frac{G\theta r}{L}$ then

$$dT = \frac{G\theta}{L} 2\pi r^3 dr.$$

The torque on the whole cross section resulting from the shear stress is:

$$T = \frac{G\theta}{L} 2\pi \int_0^R r^3 dr$$

The expression $2\pi \int_0^R r^3$ dr is called the polar second moment of area and denoted as J. The torque equation reduces to:

$$\frac{T}{J} = \frac{G\theta}{L} \qquad (13)$$

Combining equations (12) and (13), the torsion equation results in:

$$\frac{T}{J} = \frac{G\theta}{L} = \frac{\tau}{r}$$

Since the shear stress is small near the middle, then if there are no stress considerations other than torsion, a hollow shaft may be used to reduce the weight.

The processing unit 12 may determine the torsion and/or shear stress by means of the measured torque and/or the above formula.

A chain of events leading to an overspeed of the low-pressure shaft 20 begins with an angular acceleration at the front and back bearings 11A, 11B drifting away from each other beyond a specific value. The increase in angular acceleration results in an increase in the torque applied at the bearing 11A, 11B in which the angular acceleration increased, which at the same time results in an increased total torque applied to the low-pressure shaft 20. The increased torque applied to the shaft will take material of the low-pressure shaft 20 into the plastic area and in the worst case up to its rupture point, in which the low-pressure shaft 20 brakes.

The control system 1 relays on the measured forces and torques in the bearings 11A, 11B of the low-pressure shaft 20 for detecting and accommodating an overspeed event in a preventive way. In contrast, known overspeed protection systems are reactive.

The values of the forces and angular speeds measured in the bearings 11A, 11B of the low-pressure shaft 20 by means of the control system 1 are used to calculate the torques and angular accelerations of the low-pressure shaft 20.

When the torques applied to the low-pressure shaft 20 take the material of the low-pressure shaft 20 towards the border between its elastic and plastic areas and/or when the material of the low-pressure shaft 20 gets to a pre-defined point of its stress-strain curve, the control system 1 may cut off a supply of fuel into the combustion chamber 25. Thereby, it may be avoided that the low-pressure shaft 20 gets into its plastic area, and thus an overspeed of the low-pressure shaft 20 may be prevented by means of the control system 1.

Additionally or alternatively, the calculation of the total shaft output torque value and the shear stress associated to it allows logging the stress cycles to which the low-pressure shaft 20 is exposed (over its lifetime). This information allows monitoring the health of the low-pressure shaft 20 (from the strength of materials perspective). The information regarding the stress cycles enables to see the movement of shaft material within the stress-strain curve. It allows knowing if the material of the low-pressure shaft 20 has entered into the plastic area and in that case, how far the material is from its rupture point. This information can be used for improving both the safety, as well as the maintenance cost of the gas turbine engine 2 by means of predictive maintenance.

For this purpose, the control system 1 may comprise a database which is provided with information regarding the stress cycles and is adapted to store the information. An evaluation unit of the control system 1 may read the information stored in the database and may evaluate an information indicative for the health of the low-pressure shaft 20. Depending on the information indicative for the health of the low-pressure shaft 20, the evaluation unit may indicate that maintenance of the low-pressure shaft 20 is required.

Turning now to Fig. 22, the control system 1 may further comprise a shaft power calculator B9. The shaft power calculator B9 is provided with values for the angular speed and the torque at both the front and the back bearings 11A, 11B as inputs.

Mechanical power is defined as work done per second. Work done is defined as force times distance moved. In terms of rotational systems, the mechanical power is defined as torque times angle moved:

$$P = \tau \cdot \frac{\varphi}{t}$$

Where P is the mechanical power, $\varphi$ is the angle rotated by the shaft, $\tau$ is the torque and t is the unit of time. Considering infinitesimal deltas, the angle per unit of time is equal to the angular speed $\omega$, thus the mechanical power of a shaft can be expressed as:

$$P = \tau \cdot \omega$$

The values of torque and angular speed in both the front and/or rear bearings 11A, 11B can be calculated out of the signals acquired by the piezoresistive sensors 10. It is possible to calculate the power produced by the gas turbine engine 2 at the turbine 26, as well as the power transmitted to the fluid at the fan 240. As the low-pressure shaft 20 is not an ideal system, the transmission of power through the low-pressure shaft 20 is subject to mechanical losses. The mechanical losses result in an efficiency smaller than 100 percent. The mechanical efficiency of the low-pressure shaft 20 can be determined (e.g. by the processing unit 12) out of the mechanical power at the turbine 26 and the fan 240.

$$\eta[\%] = \frac{P_B}{P_T} \cdot 100$$

The power produced at the turbine 26, the power transmitted at the fan 240, and the mechanical efficiency of the low-pressure shaft 20 may be calculated, e.g. by means of the above equations. The shaft power calculator B9 of the processing unit of the control system 1 is adapted to determine the power produced at the turbine 26, the power transmitted at the fan 240, and/or the mechanical efficiency of the low-pressure shaft 20 on the basis of its inputs.

In summary, the control system 1 allows a calculation of the angular speed of the low-pressure shaft 20, a calculation of the angular acceleration of the low-pressure shaft 20, a calculation of the thrust provided by the gas turbine engine 2, a rotor bow detection, a detection of imbalances in the shaft (eventually created by non-visible defects in blades or in other shaft components), a coverage of the whole torque path in the gas turbine engine 2, a monitoring of the health of the low-pressure shaft 20 by logging the stress cycles suffered by the shaft, a calculation of the mechanical power generated in the gas turbine engine 2, a calculation of the mechanical power delivered to the air in the fan 240, and/or a calculation of the mechanical efficiency of the low-pressure shaft 20.

Moreover, the control system 1 can also be used to control the torque in turbines used in helicopters.

Above, the control system 1 has been described with reference to the low-pressure shaft 20, but of course the control system 1 may correspondingly be used for the high-pressure shaft 21 and/or an intermediate-pressure shaft not shown in Fig. 1.

**List of reference numbers**

| | |
|---|---|
| 1 | control system |
| 10 | piezoresistive sensor |
| 100 | substrate |
| 101 | piezoresistive layer |
| 102 | electrode |
| 103 | coating |
| 104 | connection wire |
| 105 | bracket |
| 106 | terminal |
| 11A, 11B | bearing |
| 110 | stationary bearing part |
| 111 | rotatable bearing part |
| 112 | ball |
| 113, 114 | race track |
| 115 | roller |
| 12 | processing unit |
| 120 | circuit |
| 121 | amplifier |
| 122 | voltage-to-current converter |
| 123 | buffer gate |
| 124 | channel |
| 125 | output |
| 13 | thermistor |
| 2 | gas turbine engine |
| 20 | shaft (low-pressure shaft) |
| 202 | center of gravity |
| 21 | shaft (high-pressure shaft) |
| 22 | housing |
| 23 | air intake |
| 24 | compressor |
| 240 | low-pressure compressor |
| 241 | high-pressure compressor |
| 242 | blade |
| 25 | combustion chamber |

| | | |
|---|---|---|
| 26 | turbine | |
| 260 | low-pressure turbine | |
| 261 | high-pressure turbine | |
| 262 | blade | |
| 27 | nozzle | |
| 28 | bypass duct | |
| $a_{Bx}$ | acceleration | |
| $a_{Tx}$ | acceleration | |
| $a_y$ | acceleration in y direction | |
| $a_z$ | acceleration in z direction | |
| $A_F$ | aerodynamic force | |
| $A_{FT}$ | aerodynamic force | |
| B1-B9 | functional blocks | |
| $D_B$ | drag | |
| $D_T$ | drag | |
| $F_{Bx}$ | aerodynamic force on blade in x direction | |
| $F_{Tx}$ | aerodynamic force on blade in x direction | |
| $F_{BXT}$ | total aerodynamic force in x direction | |
| $F_{TXT}$ | total aerodynamic force in x direction | |
| $F_{x1}$, $F_{y1}$, $F_{z1}$ | forces on front bearing | |
| $F_{y2}$, $F_{z2}$ | forces on rear bearing | |
| $L_1$-$L_4$ | length | |
| $M_B$ | mass of low-pressure-compressor stage | |
| Mg | weight force | |
| $M_T$ | mass of low-pressure-turbine stage | |
| $Q_B$ | resistance to rotation | |
| $Q_T$ | resistance to rotation | |
| R | rotational axis | |
| r | direction of rotation | |
| $T_B$ | thrust | |
| $T_T$ | thrust | |
| $V_B$ | the translational speed of blade | |
| $V_{FB}$ | relative speed | |
| $V_{TB}$ | air speed | |
| x, y, z | orthogonal coordinate axes | |
| $\alpha$, $\beta$, $\gamma$, $\delta$, $\beta$, $\theta$ | angle | |

**Claims**

1.  Gas turbine engine (2), having a control system (1) and a bearing (11A), the control system comprising a processing unit, the gas turbine engine
    **characterized by**
    at least one piezoelectric, in particular piezoresistive, element (10) arranged at the bearing (11A) adapted to support a shaft (20, 21) of the gas turbine engine (2), wherein the piezoelectric element (10) is adapted to provide information indicative for a force ($F_x$, $F_y$, $F_z$) acting on the bearing (11A) to the processing unit (12), wherein the processing unit (12) is adapted to determine a thrust force of the gas turbine engine (2) based on the information provided by the piezoelectric element (10).

2.  Gas turbine engine (2) according to claim 1, wherein the processing unit (12) is adapted to determine a rotational motion of the shaft (20, 21), in particular an angular speed and/or an angular acceleration, based on periodic characteristic signals within the information provided by the at least one piezoelectric element (10).

3.  Gas turbine engine (2) according to claim 1 or 2, wherein the processing unit (12) is adapted to determine an imbalance, an overspeed and/or a break of the shaft (20, 21) based on variations in time of characteristic signals within the information provided by the at least one piezoelectric element (10).

4.  Gas turbine engine (2) according to any of the preceding claims, **characterized by** at least one second piezoelectric,

in particular piezoresistive, element (10) being arranged at a second bearing (11B) of the control system (1), adapted to support the shaft (20, 21), and being adapted to provide information indicative for a force ($F_y$, $F_z$) acting on the second bearing (11A) to the processing unit (12).

5. Gas turbine engine (2) according to claim 4, wherein the processing unit (12) is adapted to determine a torque, a bending, a mechanical power and/or a mechanical efficiency of the shaft (20, 21) based on the information provided by the at least one piezoelectric element (10) and the at least one second piezoelectric element (10).

6. Gas turbine engine (2) according to any of the preceding claims, wherein two or more piezoelectric elements (10) are arranged at the bearing (11A, 11B) at different locations and/or in different orientations, in particular around a circumference of a stationary bearing part (110) encompassing a rotatable bearing part (111).

7. Gas turbine engine (2) according to any of the preceding claims, wherein the processing unit (12) is adapted to steer an operation of the gas turbine engine (2) on the basis of at least one parameter of the gas turbine engine (2) determined by the processing unit (12) based on the information provided by the at least one piezoelectric element (10).

8. Method for controlling a gas turbine engine (2), **characterized in that** at least one piezoelectric, in particular piezoresistive, element (10) is arranged at a bearing (11A) adapted to support a shaft (20, 21) of the gas turbine engine (2), wherein the piezoelectric element (10) provides information indicative for a force ($F_x$, $F_y$, $F_z$) acting on the bearing (11A) to a processing unit (12), wherein the processing unit (12) determines a thrust force of the gas turbine engine (2) based on the information provided by the piezoelectric element (10).

9. Method according to claim 8, wherein the processing unit (12) determines a rotational motion of the shaft (20, 21), in particular an angular speed and/or an angular acceleration, based on periodic characteristic signals within the information provided by the at least one piezoelectric element (10).

10. Method according to claim 8 or 9, wherein the processing unit (12) determines an imbalance, an overspeed and/or a break of the shaft (20, 21) based on variations in time of characteristic signals within the information provided by the at least one piezoelectric element (10).

11. Method according to any of claims 8 to 10, **characterized by** arranging at least one second piezoelectric, in particular piezoresistive, element (10) at a second bearing (11B) adapted to support the shaft (20, 21), and providing information indicative for a force ($F_y$, $F_z$) acting on the second bearing (11A) to the processing unit (12).

12. Method according to claim 11, wherein the processing unit (12) determines a torque, a bending, a mechanical power and/or a mechanical efficiency of the shaft (20, 21) based on the information provided by the at least one piezoelectric element (10) and the at least one second piezoelectric element (10).

13. Method according to any of claims 8 to 12, **characterized by** arranging two or more piezoelectric elements (10) at the bearing (11A, 11B) at different locations and/or in different orientations, in particular around a circumference of a stationary bearing part (110) encompassing a rotatable bearing part (111).

14. Method according to any of claims 8 to 13, wherein the processing unit (12) steers an operation of the gas turbine engine (2) on the basis of at least one parameter of the gas turbine engine (2) determined by the processing unit (12) based on the information provided by the at least one piezoelectric element (10).

**Patentansprüche**

1. Gasturbinentriebwerk (2) mit einem Steuersystem (1) und einem Lager (11A), wobei das Steuersystem eine Verarbeitungseinheit umfasst, wobei das Gasturbinentriebwerk
**gekennzeichnet ist durch**
mindestens ein piezoelektrisches, insbesondere piezoresistives, Element (10), das an dem Lager (11A) angeordnet ist, das ausgelegt ist, eine Welle (20, 21) des Gasturbinentriebwerks (2) zu stützen, wobei das piezoelektrische Element (10) ausgelegt ist, Informationen, die indikativ für eine auf das Lager (11A) wirkende Kraft ($F_x$, $F_y$, $F_z$) sind, der Verarbeitungseinheit (12) bereitzustellen, wobei die Verarbeitungseinheit (12) ausgelegt ist, eine Schubkraft des Gasturbinentriebwerks (2) basierend auf den **durch** das piezoelektrische Element (10) bereitgestellten Informationen zu bestimmen.

2. Gasturbinentriebwerk (2) nach Anspruch 1, wobei die Verarbeitungseinheit (12) ausgelegt ist, eine Drehbewegung der Welle (20, 21), insbesondere eine Winkelgeschwindigkeit und/oder eine Winkelbeschleunigung, basierend auf periodischen charakteristischen Signalen in den durch das mindestens eine piezoelektrische Element (10) bereitgestellten Informationen zu bestimmen.

3. Gasturbinentriebwerk (2) nach Anspruch 1 oder 2, wobei die Verarbeitungseinheit (12) ausgelegt ist, eine Unwucht, eine Überdrehzahl und/oder einen Bruch der Welle (20, 21) basierend auf Schwankungen im Zeitverlauf von charakteristischen Signalen in den durch das mindestens eine piezoelektrische Element (10) bereitgestellten Informationen zu bestimmen.

4. Gasturbinentriebwerk (2) nach einem der vorhergehenden Ansprüche, **gekennzeichnet durch** mindestens ein zweites piezoelektrisches, insbesondere piezoresistives, Element (10), das an einem zweiten Lager (11B) des Steuersystems (1) angeordnet ist, das ausgelegt ist, die Welle (20, 21) zu stützen, und das ausgelegt ist, Informationen, die indikativ für eine auf das zweite Lager (11A) wirkende Kraft ($F_y$, $F_z$) sind, der Verarbeitungseinheit (12) bereitzustellen.

5. Gasturbinentriebwerk (2) nach Anspruch 4, wobei die Verarbeitungseinheit (12) ausgelegt ist, ein Drehmoment, eine Biegung, eine mechanische Leistung und/oder einen mechanischen Wirkungsgrad der Welle (20, 21) basierend auf den durch das mindestens eine piezoelektrische Element (10) und das mindestens eine zweite piezoelektrische Element (10) bereitgestellten Informationen zu bestimmen.

6. Gasturbinentriebwerk (2) nach einem der vorhergehenden Ansprüche, wobei zwei oder mehr piezoelektrische Elemente (10) an dem Lager (11A, 11B) an unterschiedlichen Lagen und/oder in unterschiedlichen Ausrichtungen angeordnet sind, insbesondere um einen Umfang eines stationären Lagerteils (110), das einen drehbaren Lagerteil (111) umschließt.

7. Gasturbinentriebwerk (2) nach einem der vorhergehenden Ansprüche, wobei die Verarbeitungseinheit (12) ausgelegt ist, einen Betrieb des Gasturbinentriebwerks (2) auf der Grundlage mindestens eines Parameters des Gasturbinentriebwerks (2) zu lenken, der durch die Verarbeitungseinheit (12) basierend auf den durch das mindestens eine piezoelektrische Element (10) bereitgestellten Informationen bestimmt ist.

8. Verfahren zum Steuern eines Gasturbinentriebwerks (2), **dadurch gekennzeichnet, dass** mindestens ein piezoelektrisches, insbesondere piezoresistives, Element (10) an einem Lager (11A) angeordnet ist, das ausgelegt ist, eine Welle (20, 21) des Gasturbinentriebwerks (2) zu stützen, wobei das piezoelektrische Element (10) Informationen, die indikativ für eine auf das Lager (11A) wirkende Kraft ($F_x$, $F_y$, $F_z$) sind, einer Verarbeitungseinheit (12) bereitstellt, wobei die Verarbeitungseinheit (12) eine Schubkraft des Gasturbinentriebwerks (2) basierend auf den durch das piezoelektrische Element (10) bereitgestellten Informationen bestimmt.

9. Verfahren nach Anspruch 8, wobei die Verarbeitungseinheit (12) eine Drehbewegung der Welle (20, 21), insbesondere eine Winkelgeschwindigkeit und/oder eine Winkelbeschleunigung, basierend auf periodischen charakteristischen Signalen in den durch das mindestens eine piezoelektrische Element (10) bereitgestellten Informationen bestimmt.

10. Verfahren nach Anspruch 8 oder 9, wobei die Verarbeitungseinheit (12) eine Unwucht, eine Überdrehzahl und/oder einen Bruch der Welle (20, 21) basierend auf Schwankungen im Zeitverlauf von charakteristischen Signalen in den durch das mindestens eine piezoelektrische Element (10) bereitgestellten Informationen bestimmt.

11. Verfahren nach einem der Ansprüche 8 bis 10, **gekennzeichnet durch** Anordnen mindestens eines zweiten piezoelektrischen, insbesondere piezoresistiven, Elements (10) an einem zweiten Lager (11B), das ausgelegt ist, die Welle (20, 21) zu stützen, und Bereitstellen von Informationen, die indikativ für eine auf das zweite Lager (11A) wirkende Kraft ($F_y$, $F_z$) sind, an die Verarbeitungseinheit (12).

12. Verfahren nach Anspruch 11, wobei die Verarbeitungseinheit (12) ein Drehmoment, eine Biegung, eine mechanische Leistung und/oder einen mechanischen Wirkungsgrad der Welle (20, 21) basierend auf den durch das mindestens eine piezoelektrische Element (10) und das mindestens eine zweite piezoelektrische Element (10) bereitgestellten Informationen bestimmt.

**13.** Verfahren nach einem der Ansprüche 8 bis 12, **gekennzeichnet durch** Anordnen von zwei oder mehr piezoelektrischen Elementen (10) an dem Lager (11A, 11B) an unterschiedlichen Lagen und/oder in unterschiedlichen Ausrichtungen, insbesondere um einen Umfang eines stationären Lagerteils (110), das einen drehbaren Lagerteil (111) umschließt.

**14.** Verfahren nach einem der Ansprüche 8 bis 13, wobei die Verarbeitungseinheit (12) einen Betrieb des Gasturbinentriebwerks (2) auf der Grundlage mindestens eines Parameters des Gasturbinentriebwerks (2) lenkt, der durch die Verarbeitungseinheit (12) basierend auf den durch das mindestens eine piezoelektrische Element (10) bereitgestellten Informationen bestimmt ist.

**Revendications**

**1.** Moteur de turbine à gaz (2), ayant un système de contrôle (1) et un palier (11A),
le système de contrôle comprenant une unité de traitement, le moteur de turbine à gaz étant **caractérisé par**
au moins un élément piézoélectrique, en particulier piézorésistif (10) disposé au niveau du palier (11A) adapté pour supporter un arbre (20, 21) du moteur de turbine à gaz (2), l'élément piézoélectrique (10) étant adapté pour fournir des informations représentatives d'une force ($F_x$, $F_y$, $F_z$) agissant sur le palier (11A) à l'unité de traitement (12), l'unité de traitement (12) étant adaptée pour déterminer une force de poussée du moteur de turbine à gaz (2) sur la base des informations fournies par l'élément piézoélectrique (10).

**2.** Moteur de turbine à gaz (2) selon la revendication 1, dans lequel l'unité de traitement (12) est adaptée pour déterminer un mouvement de rotation de l'arbre (20, 21), en particulier une vitesse angulaire et/ou une accélération angulaire, sur la base de signaux caractéristiques périodiques à l'intérieur des informations fournies par l'au moins un élément piézoélectrique (10).

**3.** Moteur de turbine à gaz (2) selon la revendication 1 ou 2, dans lequel l'unité de traitement (12) est adaptée pour déterminer un déséquilibre, une vitesse excessive et/ou une rupture de l'arbre (20, 21) sur la base de variations dans le temps de signaux caractéristiques à l'intérieur des informations fournies par l'au moins un élément piézoélectrique (10).

**4.** Moteur de turbine à gaz (2) selon l'une quelconque des revendications précédentes, **caractérisé par** au moins un deuxième élément piézoélectrique, en particulier piézorésistif (10) disposé au niveau d'un deuxième palier (11B) du système de contrôle (1), adapté pour supporter l'arbre (20, 21), et adapté pour fournir des informations représentatives d'une force ($F_y$, $F_z$) agissant sur le deuxième palier (11A) à l'unité de traitement (12).

**5.** Moteur de turbine à gaz (2) selon la revendication 4, dans lequel l'unité de traitement (12) est adaptée pour déterminer un couple, une flexion, une puissance mécanique et/ou un rendement mécanique de l'arbre (20, 21) sur la base des informations fournies par l'au moins un élément piézoélectrique (10) et l'au moins un deuxième élément piézoélectrique (10).

**6.** Moteur de turbine à gaz (2) selon l'une quelconque des revendications précédentes, dans lequel au moins deux éléments piézoélectriques (10) sont disposés au niveau du palier (11A, 11B) à différents emplacements et/ou dans différentes orientations, en particulier autour d'une circonférence d'une partie de palier stationnaire (110) entourant une partie de palier rotative (111).

**7.** Moteur de turbine à gaz (2) selon l'une quelconque des revendications précédentes, dans lequel l'unité de traitement (12) est adaptée pour diriger une opération du moteur de turbine à gaz (2) sur la base d'au moins un paramètre du moteur de turbine à gaz (2) déterminé par l'unité de traitement (12) sur la base des informations fournies par l'au moins un élément piézoélectrique (10).

**8.** Procédé de contrôle d'un moteur de turbine à gaz (2), **caractérisé en ce qu'**au moins un élément piézoélectrique, en particulier piézorésistif (10) est disposé au niveau d'un palier (11A) adapté pour supporter un arbre (20, 21) du moteur de turbine à gaz (2), l'élément piézoélectrique (10) fournissant des informations représentatives d'une force ($F_x$, $F_y$, $F_z$) agissant sur le palier (11A) à une unité de traitement (12), l'unité de traitement (12) déterminant une force de poussée du moteur de turbine à gaz (2) sur la base des informations fournies par l'élément piézoélectrique (10).

**9.** Procédé selon la revendication 8, dans lequel l'unité de traitement (12) détermine un mouvement de rotation de l'arbre (20, 21), en particulier une vitesse angulaire et/ou une accélération angulaire, sur la base de signaux caractéristiques périodiques à l'intérieur des informations fournies par l'au moins un élément piézoélectrique (10).

**10.** Procédé selon la revendication 8 ou 9, dans lequel l'unité de traitement (12) détermine un déséquilibre, une vitesse excessive et/ou une rupture de l'arbre (20, 21) sur la base de variations dans le temps de signaux caractéristiques à l'intérieur des informations fournies par l'au moins un élément piézoélectrique (10).

**11.** Procédé selon l'une quelconque des revendications 8 à 10, **caractérisé par** la mise en place d'au moins un deuxième élément piézoélectrique, en particulier piézorésistif (10) au niveau d'un deuxième palier (11B) adapté pour supporter l'arbre (20, 21), et fournissant des informations représentatives d'une force ($F_y$, $F_z$) agissant sur le deuxième palier (11A) à l'unité de traitement (12).

**12.** Procédé selon la revendication 11, dans lequel l'unité de traitement (12) détermine un couple, une flexion, une puissance mécanique et/ou un rendement mécanique de l'arbre (20, 21) sur la base des informations fournies par l'au moins un élément piézoélectrique (10) et l'au moins un deuxième élément piézoélectrique (10).

**13.** Procédé selon l'une quelconque des revendications 8 à 12, **caractérisé par** la mise en place d'au moins deux éléments piézoélectriques (10) au niveau du palier (11A, 11B) à différents emplacements et/ou dans différentes orientations, en particulier autour d'une circonférence d'une partie de palier stationnaire (110) entourant une partie de palier rotative (111).

**14.** Procédé selon l'une quelconque des revendications 8 à 13, dans lequel l'unité de traitement (12) dirige une opération du moteur de turbine à gaz (2) sur la base d'au moins un paramètre du moteur de turbine à gaz (2) déterminé par l'unité de traitement (12) sur la base des informations fournies par l'au moins un élément piézoélectrique (10).

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13A

Fig. 13B

Fig. 14

Fig. 15

Fig. 16

Fig. 17

Fig. 18

B61    B63    B64

B62

Fig. 19

B7    B8

Fig. 20

Fig. 21

Fig. 22

**EP 3 330 493 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 669438 A
- DE 102010024850 A1
- EP 3015659 A1
- EP 1148261 A2